# EUROPÄISCHE PATENTSCHRIFT

(11) **EP 1 109 010 B1**
(45) Veröffentlichungstag und Bekanntmachung des Hinweises auf die Patenterteilung: **28.06.2006**
(21) Anmeldenummer: 00122931.9
(22) Anmeldetag: 21.10.2000
(51) Int. Cl.: G01N 21/90

(54) **Inspektionsvorrichtung**
Inspection device
Dispositif d'inspection

(30) Priorität: 09.11.1999 DE 19953738
(43) Veröffentlichungstag der Anmeldung: 20.06.2001
(73) Patentinhaber: KRONES AG, 93068 Neutraubling (DE)
(72) Erfinder: Brunner, Xaver, 93093 Donaustauf (DE); Piana, Stefan, 93096 Köfering (DE); Kwirandt, Gerdrainer, Dr., 93083 Obertraubling (DE)

(56) Entgegenhaltungen:
- DE-A- 3 919 110
- DE-A- 19 904 732
- US-A- 5 059 031
- US-A- 5 314 071

## Beschreibung

Die Erfindung betrifft eine Inspektionsvorrichtung gemäß dem Oberbegriff des Anspruchs 1.

Inspektionsvorrichtungen dieser Art besitzen eine Beleuchtungseinrichtung, die bei einer Durchlichtkontrolle von transparenten Flaschen üblicherweise seitlich an einer Flaschenförderbahn positioniert ist, während das durch die Flasche scheinende Licht auf der gegenüberliegenden Seite einer Kamera zugeführt wird. Die von einer Flasche gewonnenen Abbildungen werden durch eine zugeordnete Auswerteinrichtung zur Erkennung von Fehlern, Verunreinigungen oder dgl. analysiert. Es können gleichzeitig mehrere umfänglich versetzte Flaschenabbildungen durch spezielle optische Einrichtungen erzeugt werden. Eine entsprechende Vorrichtung ist beispielsweise aus dem deutschen Gebrauchsmuster G 93 11 405.2 bekannt.

Zur Beleuchtung von Flaschen sind bereits mit LEDs bestückte Beleuchtungseinrichtungen vorgeschlagen worden (DE 199 04 732 A1). Nachteiligerweise sind diese sehr raumgreifend ausgeführt.

Mit diesen Beleuchtungseinrichtungen ist eine bereichsweise unterschiedliche Beleuchtung der Seitenwand von Flaschen möglich, um bei einer Profilkontrolle dunkle Bereiche hinter den Seitenkanten des Körpers von Flaschen zu definieren, so dass ein klares Dunkelprofil an die Kamera geliefert wird.

Ferner sind aus DE 39 19 110 A1 ein Verfahren und eine Vorrichtung zum Prüfen transparenter Böden von Flaschen bekannt, mit einer Beleuchtungseinrichtung für den Boden von Flaschen, die Licht mit größerer Intensität auf den Umfangsbereich als auf den Zentralbereich des Bodens richtet und ein Verteilungsmuster der durch den Behälterboden tretenden Lichtenergie entlang wenigstens einer einer sich in der Ebene des Behälterbodens entsprechenden Richtung erzeugt. Aus diesem Lichtenergieverteilungsmuster wird ein Paar von Spitzenwerten entlang der Richtung und eines entsprechenden Paares von Positionen, die jeweils die Spitzenwerte haben, gewonnen. Basierend auf den so gewonnenen Positionen wird der wahre Mittelpunkt des Behälterbodens berechnet und eine Prüfzone um den wahren Mittelpunkt in genauer Übereinstimmung mit dem Boden des Behälters zu Analyse der Lichtenergie nur innerhalb des Bereiches der Prüfzone definiert.

Der Erfindung liegt die Aufgabe zugrunde, eine kompakt bauende und trotzdem optimale Flaschenausleuchtung ermöglichende Beleuchtungseinrichtung anzugeben.

Gelöst wird diese Aufgabe durch die kennzeichnenden Merkmale des Anspruchs 1.

Vorteilhafterweise beansprucht die mit wenig Aufwand herstellbare Beleuchtungseinrichtung nur eine geringe Bautiefe. Ein weiterer Vorteil liegt darin, dass auch bei der Verwendung eines mehrere Abbildungen erzeugenden Spiegelkabinetts jede Abbildung gleich hell ist, weil bei den Strahlengängen mit größerer Strahlweglänge zwischen Flaschenoberfläche und Beleuchtungseinrichtung das Licht aus LED-Bereichen mit größerer Helligkeit stammt, d.h. längere Strahlwege werden durch höhere Helligkeit aus den entsprechenden Bereichen der Beleuchtungseinrichtung kompensiert.

Günstig ist ferner eine Weiterbildung der Erfindung, gemäß der das LED-Array von einem Rahmen umgeben ist, der an seinen zu den LEDs gerichteten Flächen lichtreflektierende Eigenschaften aufweist, z.B. verspiegelt ist. Durch diese Maßnahme wird Licht, welches ohne Rahmen am Rand verloren gehen würde, zurückgestrahlt, so dass ein Helligkeitsabfall an den Rändern des LED-Arrays vermieden wird. Optisch wird dadurch eine unendlich große LED-Fläche vorgetäuscht.

Weitere vorteilhafte Ausgestaltungen der Erfindung sind in den Unteransprüchen angegeben.

Nachfolgend wird ein Ausführungsbeispiel anhand der Figuren erläutert. Es zeigt:

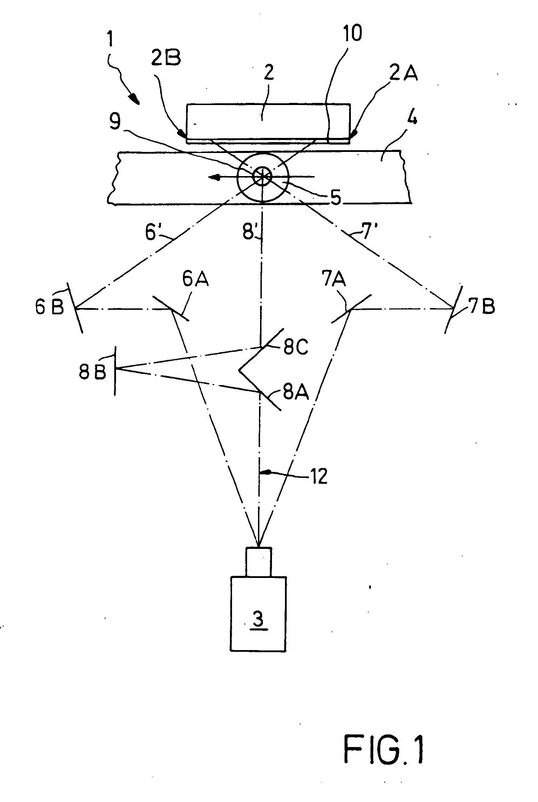

- Fig. 1: eine schematische Draufsicht auf eine Inspektionsstation zur Seitenwandkontrolle von Flaschen,
- Fig. 2: eine Vorderansicht der Beleuchtungseinrichtung in Fig. 1,

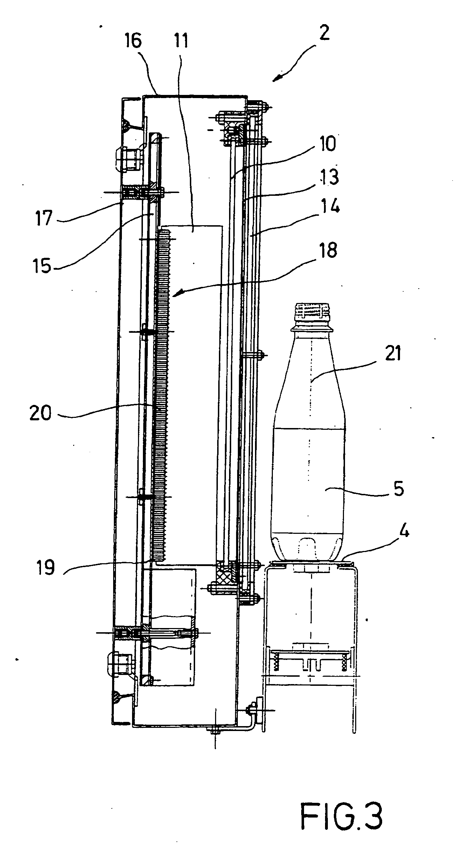

- Fig. 3: einen Vertikalschnitt der Beleuchtungseinrichtung nach Fig. 2 und

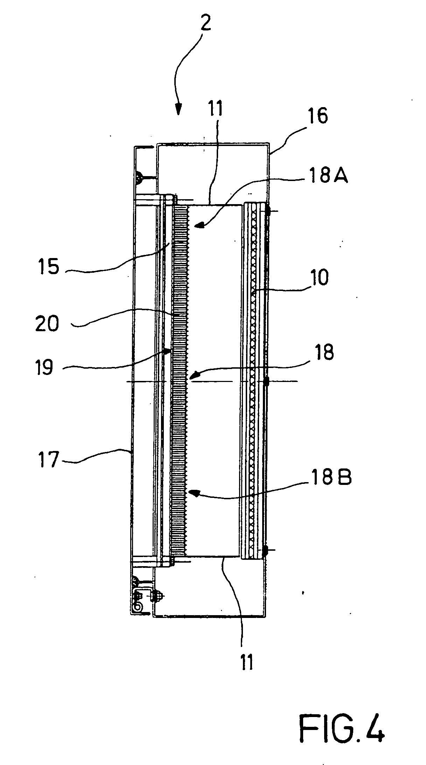

- Fig. 4: einen Horizontalschnitt der Beleuchtungseinrichtung nach Fig. 2.

Die Flaschenseitenwandkontrolle erfolgt durch eine an einem die zu prüfenden Flaschen 5 aufrechtstehend in einer einspurigen Reihe kontinuierlich transportierenden Förderband 4 angeordnete Inspektionsstation 1, die im wesentlichen aus einem diffuses Licht abstrahlenden Leuchtschirm 2, einer CCD-Kamera 3 und zwischen dem Förderer 4 und der Kamera 3 angeordneten Spiegeln zur Erzeugung mehrerer Strahlengänge 6', 7', 8' besteht. Von diesen Strahlengängen ist jeweils nur die Mittelachse strichpunktiert angedeutet. Der vertikal stehende Leuchtschirm ist parallel zum Förderband und der Längsachse 21 der darauf stehenden Flaschen ausgerichtet.

Die beiden äußeren Strahlengänge 6 und 7 werden durch jeweils zwei Spiegel 6A und 6B bzw. 7A und 7B definiert, während der mittlere Strahlengang 8 durch drei Spiegel 8A, 8B und 8C bestimmt ist. Alle drei Strahlengänge treffen im Kreuzungsbereich 9 vor dem Leuchtschirm 2 aus umfänglich versetzten Richtungen auf die äußere Mantelfläche einer in Pfeilrichtung transportierten Flasche 5. Ausgehend von der Flasche 5 bis zur Kamera 3 sind die drei Strahlengänge aufgrund der getroffenen Spiegelanordnung annähernd gleich lang, während die Strahlabschnitte von der Flasche 5 bis zur ebenen Milchglasscheibe 10 des Leuchtschirms 2 ungleich lang sind, d.h. der entsprechende Abschnitt des mittleren Strahlengangs 8' ist kürzer als der der beiden anderen Strahlengänge 6' und 7'. Bezüglich weiterer Details wird auf das vorher erwähnte deutsche Gebrauchsmuster G 93 11 405.2 verwiesen.

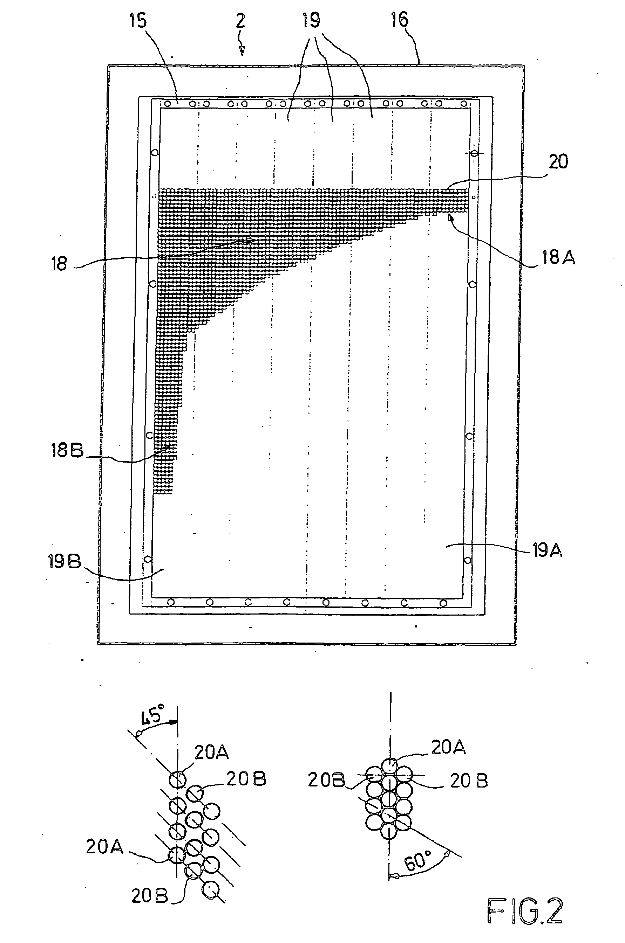

Um dennoch eine optimale Ausleuchtung der Flasche 5 zu erzielen, besitzt der Leuchtschirm 2 keine über seine gesamte Breite gleichmäßige Helligkeitsverteilung, sondern einen von den beiden vertikalen Rändern 2A und 2B zur Mitte hin abnehmenden Helligkeitsverlauf, der entsprechend einer beliebig vorgebbaren Funktion ausgebildet sein kann. Dies geschieht mit Hilfe einer unterschiedlichen Ansteuerung der als Leuchtmittel im Inneren des Leuchtschirms 2 verwendeten LEDs 20, deren Anordnung aus der Fig. 2 besser erkennbar ist. Dort ist der Leuchtschirm 2 ohne seine Milchglasscheibe mit der zur Kamera 3 weisenden Seite aus der Richtung der optischen Achse 12 der Kamera gesehen dargestellt.

Es sind dicht mit LEDs 20 bestückte Platinen 19, die ein ebenes, zweidimensionales LED-Array 18 bilden, erkennbar, das im vorliegenden Fall aus insgesamt acht senkrecht nebeneinander angeordneten, streifenförmigen Platinenmodulen 19 gebildet wird, wobei die vertikalen Randbereiche 18A und 18B des Arrays durch ein Platinenmodul 19A bzw. 19B gebildet werden. Die auf dem äußeren rechten Modul 19A und linkem Modul 19B platzierten LEDs leuchten heller (ca. 30%) als die der mittleren Module. Die Ansteuerung der LEDs ist problemlos platinenweise, zeilenweise oder einzeln realisierbar.

Um auch bei Flaschensorten mit unterschiedlichen Materialfarbtönen (braun, grün, blau, farblos etc.) eine weitere universelle Anpassung der Beleuchtung bei einer Sortenumstellung vornehmen zu können, ist es von Vorteil, nicht nur LEDs mit gleicher Lichtwellenlänge zu verwenden, sondern ein Array 18 durch gemischte Bestückung mit LEDs unterschiedlicher Lichtwellenlängenabstrahlung zu bilden. So können beispielsweise abwechselnd orange LEDs 20A (615 Nanometer) und grüne LEDs 20B (520 Nanometer) nebeneinander auf den Platinen 19 angeordnet sein, wobei die Orangen speziell für Braunglas und die Grünen für Grünglas geeignet sind. Je nach Flaschenfarbe können die LEDs der einen oder anderen Wellenlänge angesteuert bzw. stufenlos Mischbeleuchtungen eingestellt werden, z.B. zur Untersuchung blauer Flaschen. Entsprechend der Darstellung in Fig. 2 sind die LEDs 20 in rechtwinklig zueinander ausgerichteten Vertikal- und Horizontalreihen auf den Platinen 19 angeordnet.

Eine bessere Ausnutzung der zur Verfügung stehenen Arrayfläche wird durch eine gegenseitig versetzte Anordnung der LEDs erreicht, bei der diese sich auf unter einem Winkel von 45 Grad schneidenden Linien (Vertikal- und Schräglinien) befinden. Eine geometrische Anordnung mit einem Schnittwinkel von 60 Grad (Vertikal- und Schräglinie) erlaubt die dichtest mögliche Packung der LEDs und damit die beste Helligkeitsausbeute bei gegebener Fläche. Diese Varianten sind in Fig. 2 unten als vergrößerte Teilausschnitte dargestellt.

An den äußeren Rändern des LED-Arrays 18 insbesondere den Vertikalen 18A, 18B, befinden sich orthogonal vom Array 18 vorstehende, die LEDs überragende Bleche 11, die einen geschlossenen Rahmen bilden und an ihren zu den LEDs weisenden Flächen lichtreflektierende Eigenschaften aufweisen, vorzugsweise verspiegelt sind. Auf die Bleche treffendes Licht wird zu einer mit Abstand vor den LEDs angeordneten Milchglasscheibe 10 (Opalglas) reflektiert. Durch diese Maßnahme wird ein Helligkeitsabfall am Rand des LED-Arrays vermieden, d.h. optisch wird eine unendlich große LED-Fläche vorgetäuscht.

Da die Milchglasscheibe 10 annähernd die Hälfte des von den LEDs abgestrahlten Lichts nach hinten zurückstreut, sind die die LED tragenden Platinen 19 ebenfalls mit Licht reflektierenden Eigenschaften versehen, sei es durch einen Lackauftrag (weiß) oder eine spiegelnde Beschichtung. Anstelle dessen kann auch ein verspiegeltes Lochraster bzw. - blech (nicht dargestellt) verwendet werden, das über die LEDs 20 auf die Platinen 19 steckbar ist und zugleich als Ausrichtgitter der LEDs dient.

Bei Verwendung von gleichmäßig breit strahlenden LEDs (30 Grad oder 45 Grad) und einem ausreichenden Abstand (ca. 70 mm) zur Milchglasscheibe 10 ist keine Strukturglasscheibe zur Lichthomogenisierung vor der Milchglasscheibe notwendig. An der zur Flasche 5 gerichteten Seite der Milchglasscheibe befindet sich ein Polfilter 13 mit einer vorgeordneten Schutzglasscheibe 14.

Die Platinen 19 sind an einem rechteckigen Rahmen 15 befestigt, der mit der lösbaren Rückwand 17 des Gehäuses 16 des Leuchtschirms 2 verbunden ist.

## Patentansprüche

1. Inspektionsvorrichtung (1) zur Seitenwandkontrolle von Flaschen (5) oder dgl. Gefäße mit einer Beleuchtungseinrichtung (2), die bei einer Durchlichtkontrolle seitlich an einer Flaschenförderbahn (4) positioniert ist, während das durch die Flasche bzw. das Gefäß scheinende Licht auf der gegenüberliegenden Seite einer Kamera (3) zugeführt wird, **dadurch gekennzeichnet, dass** der Leuchtkörper der Beleuchtungseinrichtung aus einem zweidimensionalen, ebenen LED-Array (18) gebildet wird, dessen zur Flaschenlängsachse parallelen Randbereiche (18A, 18B) heller als das dazwischenliegende Zentrum leuchten derart, dass bei den Strahlengängen mit größerer Strahlweglänge zwischen Flaschenoberfläche und Beleuchtungseinrichtung (2) das Licht aus den LED-Bereichen mit größerer Helligkeit stammt.

2. Vorrichtung nach Anspruch 1, **dadurch gekennzeichnet, dass** die Helligkeit vom Zentrum zu den Randbereichen (18A, 18B) um annähernd 30% zunimmt.

3. Vorrichtung nach Anspruch 1 oder 2, **dadurch gekennzeichnet, dass** das LED-Array (18) an seinen äußeren Rändern einen reflektierenden Rahmen (15) aufweist.

4. Vorrichtung nach wenigstens einem der Ansprüche 1 bis 3, **dadurch gekennzeichnet, dass** das LED-Array (18) wenigstens eine die LEDs (20) aufnehmende Platine (19) besitzt, der an ihrer die LED tragenden Seite Mittel mit lichtreflektierenden Eigenschaften zugeordnet sind.

5. Vorrichtung nach Anspruch 4, **dadurch gekennzeichnet, dass** die Mittel als eine auf die Platinenoberfläche aufgetragende lichtreflektierende Beschichtung oder ein über die LED auf die Platine steckbares Lochblech mit lichtreflektierenden Eigenschaften ausgebildet sind.

6. Vorrichtung nach wenigstens einem der Ansprüche 1 bis 5, **dadurch gekennzeichnet, dass** das LED-Array (18) aus mehreren mit LEDs (20) bestückten Platinenmodulen (19) gebildet wird, vorzugsweise streifenförmigen Platinenmodulen.

7. Vorrichtung nach wenigstens einem der Ansprüche 1 bis 6, **dadurch gekennzeichnet, dass** LEDs (20) auf sich unter einem Winkel von 45 oder 60 Grad schneidenden Linien angeordnet sind, vorzugsweise unmittelbar nebeneinander.

8. Vorrichtung nach wenigstens einem der Ansprüche 1 bis 7, **dadurch gekennzeichnet, dass** das LED-Array (18) mit Licht in verschiedenen Farbspektren abstrahlenden LEDs (20A, 20B) bestückt ist, vorzugsweise orangen und grünen LEDs.

9. Vorrichtung nach wenigstens einem der Ansprüche 1 bis 8, **dadurch gekennzeichnet, dass** das LED-Array (18) mit gleichmäßig breitstrahlenden LEDs (20), insbesondere in einem Winkelbereich von 30 Grad und 45 Grad, bestückt ist.

10. Vorrichtung nach Anspruch 8, **dadurch gekennzeichnet, dass** die LEDs (20) so ansteuerbar sind, dass die Helligkeit der Licht einer bestimmten Wellenlänge abstrahlenden LEDs im Verhältnis zur Helligkeit der Licht einer anderen Wellenlänge abstrahlenden LEDs veränderbar ist.

## Claims

1. Inspection device (1) for checking the side walls of bottles (5) or similar containers, having an illuminating apparatus (2) positioned, in a back-lit checking system, laterally to a bottle conveying path (4), whilst the light shining through the bottle or container is conducted on the opposing side to a camera (3), **characterised in that** the luminous body of the illuminating apparatus comprises a two-dimensional planar LED array (18) whose edge regions (18A, 18B) parallel to the bottle longitudinal axis illuminate more brightly than the centre lying between them, such that for the ray paths of greater length between the bottle surface and the illuminating apparatus (2), the light emerges from the LED regions with greater brightness.

2. Device according to claim 1, **characterised in that** the brightness increases by almost 30% from the centre to the edge regions (18A, 18B).

3. Device according to claim 1 or 2, **characterised in that** the LED array (18) has a reflective frame (15) on its outer edges.

4. Device according to at least one of the claims 1 to 3, **characterised in that** the LED array (18) has at least one board (19) accommodating the LEDs (20), to which board means with light-reflecting properties are assigned on its side bearing the LEDs.

5. Device according to claim 4, **characterised in that** the means are formed as a light-reflecting coating applied to the board surface or a perforated metal sheet with light-reflecting properties placeable over the LEDs.

6. Device according to at least one of the claims 1 to 5, **characterised in that** the LED array (18) comprises a plurality of board modules (19) equipped with LEDs (20), preferably strip-shaped board modules.

7. Device according to at least one of the claims 1 to 6, **characterised in that** LEDs (20) are arranged on lines mutually intersecting at an angle of 45° or 60°, preferably directly adjoining each other.

8. Device according to at least one of the claims 1 to 7, **characterised in that** the LED array (18) is equipped with LEDs (20A, 20B) radiating light in different colour spectra, preferably orange and green LEDs.

9. Device according to at least one of the claims 1 to 8, **characterised in that** the LED array (18) is equipped with LEDs (20) which radiate equally broadly, in particular in an angular range of 30° to 45°.

10. Device according to claim 8, **characterised in that** the LEDs (20) are controllable such that the brightness of the LEDs radiating light of a particular wavelength is changeable relative to the brightness of the LEDs radiating light of another wavelength.

## Revendications

1. Dispositif d'inspection (1) pour le contrôle des parois latérales de bouteilles (5) ou de récipients similaires, comprenant une installation d'éclairage (2) qui, lors d'un contrôle par transparence, est positionnée à côté d'un convoyeur de bouteilles (4), la lumière traversant la bouteille ou le récipient étant transmise à une caméra (3) située de l'autre côté,
**caractérisé en ce que**
le corps lumineux de l'installation d'éclairage est formé par une rangée de diodes électroluminescentes (18) dans un plan bidimensionnel dont les zones périphériques (18A, 18b) parallèles à l'axe longitudinal d'une bouteille émettent plus fortement que le centre, de sorte que pour des faisceaux lumineux ayant une plus longue trajectoire entre la surface de la bouteille et le système d'éclairage (2) la lumière provient des zones de diodes électroluminescentes de plus grande luminosité.

2. Dispositif selon la revendication 1,
**caractérisé en ce que**
la luminosité augmente de sensiblement 30 % du centre aux zones périphériques (18A, 18B).

3. Dispositif selon la revendication 1 ou 2,
**caractérisé en ce que**
sur ses bords extérieurs, la rangée de diodes électroluminescentes (18) présente un cadre réfléchissant (15).

4. Dispositif selon au moins l'une quelconque des revendications 1 à 3,
**caractérisé en ce que**
la rangée de diodes électroluminescentes (18) comprend au moins une platine (19) recevant les diodes électroluminescentes (20) à laquelle sont associés, sur sa face portant les diodes électroluminescentes, des moyens réfléchissant la lumière.

5. Dispositif selon la revendication 4,
**caractérisé en ce qu'**
un revêtement appliqué sur la surface de la platine ou une tôle perforée emboîtable au-dessus des diodes électroluminescentes sur la platine sont les moyens réfléchisssant la lumière.

6. Dispositif selon au moins l'une quelconque des revendications 1 à 5,
**caractérisé en ce que**
la rangée de diodes électroluminescentes (18) est formé à partir de plusieurs modules de platine (19) munis de diodes électroluminescentes (20), de préférence des modules en forme de bande.

7. Dispositif selon au moins l'une quelconque des revendications 1 à 6,
**caractérisé en ce que**
des diodes électroluminescentes (20) sont disposées de préférence côte à côte sur des lignes se coupant selon un angle de 45 ou 60 degrés.

8. Dispositif selon au moins l'une quelconque des revendications 1 à 7,
**caractérisé en ce que**
la rangée de diodes électroluminescentes (18) est muni de diodes électroluminescentes (20A, 20B) émettant une lumière dans différents spectres de couleur, de préférence des diodes électroluminescentes oranges ou vertes.

9. Dispositif selon au moins l'une quelconque des revendications 1 à 8,
**caractérisé en ce que**
la rangée de diodes électroluminescentes (18) est muni de diodes électroluminescentes (20) émettant sur une largeur homogène, en particulier dans une plage angulaire de 30 degrés à 45 degrés.

10. Dispositif selon la revendication 8,
**caractérisé en ce que**
les diodes électroluminescentes (20) peuvent être commandées de sorte que la luminosité des diodes électroluminescentes émettant une lumière d'une longueur d'onde déterminée soit variable par rapport à la luminosité des diodes électroluminescentes émettant une lumière d'une autre longueur d'onde.
